# EUROPEAN PATENT SPECIFICATION

(11) **EP 2 566 321 B1**
(45) Date of publication and mention of the grant of the patent: **08.08.2018**
(21) Application number: 11717924.2
(22) Date of filing: 03.05.2011
(51) Int. Cl.: A01N 25/00, A01N 25/02, A01N 39/02, A01N 43/40, A01N 57/16

(54) **USE OF COLD-STABILIZED METHYLATED VEGETABLE OILS AS AN AGRICULTURAL CHEMICAL COFORMULANT**
VERWENDUNG VON KALTSTABILISIERTEN METHYLIERTEN PFLANZENÖLEN ALS AGROCHEMISCHER BEISTOFF
UTILISATION D'HUILES VÉGÉTALES MÉTHYLÉES STABILISÉES AU FROID EN TANT QUE COFORMULANT CHIMIQUE AGRICOLE

(30) Priority: 04.05.2010 US 331033 P
(43) Date of publication of application: 13.03.2013
(73) Proprietor: Dow AgroSciences LLC, Indianapolis, IN 46268 (US)
(72) Inventor: VOGLEWEDE, Christopher, Calgary AB T3H 5T9 (CA); SWAYZE, Karen, Carmel IN 46033 (US); TANK, Holger, Zionsville IN 46077 (US)
(74) Representative: f & e patent
(86) International application number: PCT/US2011/034881
(87) International publication number: WO 2011/140005

(56) References cited:
- WO-A1-2008/080163
- US-A1- 2009 199 462
- Anonymous: "UAF Newsroom: Researchers bring soy biodiesel for cold weather testing", , 3 February 2009 (2009-02-03), XP055320435, Retrieved from the Internet: URL:http://news.uaf.edu/news/a_news/200903 02132445.html [retrieved on 2016-11-17]
- Anonymous: "Indiana Soybean Alliance to Test PermaFlo(TM) Biodiesel in Arctic Circle | BioFuels Journal", , 2 March 2009 (2009-03-02), XP055320437, Retrieved from the Internet: URL:http://www.biofuelsjournal.com/article s/indiana_soybean_alliance_to_test_permafl o_trade__biodiesel_in_arctic_circle-71806. html [retrieved on 2016-11-17]
- Bioage Media: "Green Car Congress: Cold-Weather Testing of 100% Permaflo Soy Biodiesel at the Arctic Circle", , 3 March 2009 (2009-03-03), XP055320440, Retrieved from the Internet: URL:http://www.greencarcongress.com/2009/0 3/cold-weather-te.html [retrieved on 2016-11-17]

## Description

It is known that various types of pesticides such as insecticides, insect repellents, fungicides, bactericides, herbicides, and plant growth regulators may be formulated into various products for use on crops and ornamental plants for controlling weeds, insects, and plant diseases.

These types of pesticide products may be formulated as liquids, powders or granules. Solvents, emulsifiers, dispersing agents and wetting agents are normally incorporated into such compositions in order to ensure that a uniform pesticide formulation has been prepared.

The successful employment of any pesticide depends upon its proper formulation into a preparation that can be easily diluted with water or other liquids into ready-to-use mixtures for application onto a targeted pest and/or agricultural substrate with safety to the applicator, animals and crops. The preparation and use of such formulations typically necessitates making them in concentrated form. Thus, the use of auxiliary agents such as solvents, emulsifiers and wetting or dispersing agents are typically required.

Conventionally-used solvent/carriers for pesticides include, among other things, isophorone, methylisobutyl ketone and *N*-methyl pyrrolidone. These solvent/carriers are oftentimes either expensive, difficult to source and/or unattractive due to their inherent toxicity, phytotoxicity or regulatory status. Consequently, there exists a need in the pesticide industry to find alternatives to the currently used solvent/carrier systems.

Plant-based solvent/carriers have a more favorable toxicology profile than petroleum-based solvent/carriers, but their utility is limited due to viscosity at low temperatures. WO 2008/080163 A1 describes formulations comprising mono alkyl esters of long chain fatty acids, *e.g*. soybean oil methyl ester, as a carrier. It would be desirable to have a cold-stabilized vegetable oil which, in addition to a favorable toxicology profile, would also provide improved handling at low temperatures for use as an agricultural chemical solvent/carrier.

The present invention concerns a pesticide composition consisting of a) from 25 to 70 percent by weight of a methylated vegetable oil having less than 10 percent by weight of saturated fatty acid methyl esters and less than 10 percent by weight of fatty acid methyl esters of carbon chain length less than C₁₀; b) from 20 to 65 percent by weight of one or more pesticides dissolved or dispersed in the methylated vegetable oil and c) one or more surface-active agents. The use of a low-cloud point solvent/carrier in pesticidal compositions which comprises methyl esters of vegetable oils having less than 10 percent by weight of saturated fatty acid methyl esters and less than 10 percent by weight of fatty acid methyl esters of carbon chain length less than C₁₀ is described herein. The methylated vegetable oils used in the present invention may be prepared by blending individual methyl esters of vegetable oils or commercially available mixtures thereof so that the resulting composition contains less than 10 percent by weight of saturated fatty acid methyl esters and less than 10 percent by weight of fatty acid methyl esters of carbon chain length less than C₁₀. Alternately, methylated vegetable oils having less than 3 percent saturated fatty acid methyl esters may be prepared as described in U.S. Patent Application Publication 2009/0199462 A1.

The methylated vegetable oil comprises from from 25 to 70 percent by weight of the pesticidal composition.

The biologically-active ingredients used to make agricultural pesticide compositions according to the invention are generally selected from the group consisting of acaricides, insecticides, molluscicides, nematicides, insect repellents, fungicides, bactericides, herbicides, plant growth regulators and safeners.

The term herbicide is used herein to mean an active ingredient that kills, controls or otherwise adversely modifies the growth of plants. A herbicidal composition can be applied to the undesirable vegetation or to the locus of the vegetation as well as to the soil prior to emergence of the vegetation. Some of the herbicides that can be employed in the compositions of the present invention include: 4-CPA, 4-CPB, 4-CPP, 2,4-D, 3,4-DA, 2,4-DB, 3,4-DB, 2,4-DEB, 2,4-DEP, 3,4-DP, 2,3,6-TBA, 2,4,5-T, 2,4,5-TB, acetochlor, acifluorfen, aclonifen, acrolein, alachlor, allidochlor, alloxydim, allyl alcohol, alorac, ametridione, ametryn, amibuzin, amicarbazone, amidosulfuron, aminocyclopyrachlor, aminopyralid, amiprofos-methyl, amitrole, ammonium sulfamate, anilofos, anisuron, asulam, atraton, atrazine, azafenidin, azimsulfuron, aziprotryne, barban, BCPC, beflubutamid, benazolin, bencarbazone, benfluralin, benfuresate, bensulfuron, bensulide, bentazone, benzadox, benzfendizone, benzipram, benzobicyclon, benzofenap, benzofluor, benzoylprop, benzthiazuron, bicyclopyrone, bifenox, bilanafos, bispyribac, borax, bromacil, bromobonil, bromobutide, bromofenoxim, bromoxynil, brompyrazon, butachlor, butafenacil, butamifos, butenachlor, buthidazole, buthiuron, butralin, butroxydim, buturon, butylate, cacodylic acid, cafenstrole, calcium chlorate, calcium cyanamide, cambendichlor, carbasulam, carbetamide, carboxazole chlorprocarb, carfentrazone, CDEA, CEPC, chlomethoxyfen, chloramben, chloranocryl, chlorazifop, chlorazine, chlorbromuron, chlorbufam, chloreturon, chlorfenac, chlorfenprop, chlorflurazole, chlorflurenol, chloridazon, chlorimuron, chlornitrofen, chloropon, chlorotoluron, chloroxuron, chloroxynil, chlorpropham, chlorsulfuron, chlorthal, chlorthiamid, cinidon-ethyl, cinmethylin, cinosulfuron, cisanilide, clethodim, cliodinate, clodinafop, clofop, clomazone, clomeprop, cloprop, cloproxydim, clopyralid, cloransulam, CMA, copper sulfate, CPMF, CPPC, credazine, cresol, cumyluron, cyanatryn, cyanazine, cycloate, cyclosulfamuron, cycloxydim, cycluron, cyhalofop, cyperquat, cyprazine, cyprazole, cypromid, daimuron, dalapon, dazomet, delachlor, desmedipham, desmetryn, diallate, dicamba, dichlobenil, dichloralurea, dichlormate, dichlorprop, dichlorprop-P, diclofop, diclosulam, diethamquat, diethatyl, difenopenten, difenoxuron, difenzoquat, diflufenican, diflufenzopyr, dimefuron, dimepiperate, dimethachlor, dimethametryn, dimethenamid, dimethenamid-P, dimexano, dimidazon, dinitramine, dinofenate, dinoprop, dinosam, dinoseb, dinoterb, diphenamid, dipropetryn, diquat, disul, dithiopyr, diuron, DMPA, DNOC, DSMA, EBEP, eglinazine, endothal, epronaz, EPTC, erbon, esprocarb, ethalfluralin, ethametsulfuron, ethidimuron, ethiolate, ethofumesate, ethoxyfen, ethoxysulfuron, etinofen, etnipromid, etobenzanid, EXD, fenasulam, fenoprop, fenoxaprop, fenoxaprop-P, fenoxasulfone, fenteracol, fenthiaprop, fentrazamide, fenuron, ferrous sulfate, flamprop, flamprop-M, flazasulfuron, florasulam, fluazifop, fluazifop-P, fluazolate, flucarbazone, flucetosulfuron, fluchloralin, flufenacet, flufenican, flufenpyr, flumetsulam, flumezin, flumiclorac, flumioxazin, flumipropyn, fluometuron, fluorodifen, fluoroglycofen, fluoromidine, fluoronitrofen, fluothiuron, flupoxam, flupropacil, flupropanate, flupyrsulfuron, fluridone, flurochloridone, fluroxypyr, flurtamone, fluthiacet, fomesafen, foramsulfuron, fosamine, furyloxyfen, glufosinate, glufosinate-P, glyphosate, halosafen, halosulfuron, haloxydine, haloxyfop, haloxyfop-P, hexachloroacetone, hexaflurate, hexazinone, imazamethabenz, imazamox, imazapic, imazapyr, imazaquin, imazethapyr, imazosulfuron, indanofan, indaziflam, iodobonil, iodomethane, iodosulfuron, ioxynil, ipazine, ipfencarbazone, iprymidam, isocarbamid, isocil, isomethiozin, isonoruron, isopolinate, isopropalin, isoproturon, isouron, isoxaben, isoxachlortole, isoxaflutole, isoxapyrifop, karbutilate, ketospiradox, lactofen, lenacil, linuron, MAA, MAMA, MCPA, MCPA-thioethyl, MCPB, mecoprop, mecoprop-P, medinoterb, mefenacet, mefluidide, mesoprazine, mesosulfuron, mesotrione, metam, metamifop, metamitron, metazachlor, metazosulfuron, metflurazon, methabenzthiazuron, methalpropalin, methazole, methiobencarb, methiozolin, methiuron, methometon, methoprotryne, methyl bromide, methyl isothiocyanate, methyldymron, metobenzuron, metobromuron, metolachlor, metosulam, metoxuron, metribuzin, metsulfuron, molinate, monalide, monisouron, monochloroacetic acid, monolinuron, monuron, morfamquat, MSMA, naproanilide, napropamide, naptalam, neburon, nicosulfuron, nipyraclofen, nitralin, nitrofen, nitrofluorfen, norflurazon, noruron, OCH, orbencarb, *ortho-*dichlorobenzene, orthosulfamuron, oryzalin, oxadiargyl, oxadiazon, oxapyrazon, oxasulfuron, oxaziclomefone, oxyfluorfen, parafluron, paraquat, pebulate, pelargonic acid, pendimethalin, penoxsulam, pentachlorophenol, pentanochlor, pentoxazone, perfluidone, pethoxamid, phenisopham, phenmedipham, phenmedipham-ethyl, phenobenzuron, phenylmercury acetate, picloram, picolinafen, pinoxaden, piperophos, potassium arsenite, potassium azide, potassium cyanate, pretilachlor, primisulfuron, procyazine, prodiamine, profluazol, profluralin, profoxydim, proglinazine, prometon, prometryn, propachlor, propanil, propaquizafop, propazine, propham, propisochlor, propoxycarbazone, propyrisulfuron, propyzamide, prosulfalin, prosulfocarb, prosulfuron, proxan, prynachlor, pydanon, pyraclonil, pyraflufen, pyrasulfotole, pyrazolynate, pyrazosulfuron, pyrazoxyfen, pyribenzoxim, pyributicarb, pyriclor, pyridafol, pyridate, pyriftalid, pyriminobac, pyrimisulfan, pyrithiobac, pyroxasulfone, pyroxsulam, quinclorac, quinmerac, quinoclamine, quinonamid, quizalofop, quizalofop-P, rhodethanil, rimsulfuron, saflufenacil, S-metolachlor, sebuthylazine, secbumeton, sethoxydim, siduron, simazine, simeton, simetryn, SMA, sodium arsenite, sodium azide, sodium chlorate, sulcotrione, sulfallate, sulfentrazone, sulfometuron, sulfosulfuron, sulfuric acid, sulglycapin, swep, TCA, tebutam, tebuthiuron, tefuryltrione, tembotrione, tepraloxydim, terbacil, terbucarb, terbuchlor, terbumeton, terbuthylazine, terbutryn, tetrafluron, thenylchlor, thiazafluron, thiazopyr, thidiazimin, thidiazuron, thiencarbazone-methyl, thifensulfuron, thiobencarb, tiocarbazil, tioclorim, topramezone, tralkoxydim, tri-allate, triasulfuron, triaziflam, tribenuron, tricamba, triclopyr, tridiphane, trietazine, trifloxysulfuron, trifluralin, triflusulfuron, trifop, trifopsime, trihydroxytriazine, trimeturon, tripropindan, tritac tritosulfuron, vernolate, xylachlor.

The term safener is used herein to mean compounds applied with herbicides to protect crops against their injury. Some of the herbicide safeners that can be employed in the compositions of the present invention include: benoxacor, benthiocarb, brassinolide, cloquintocet (mexyl), cyometrinil, daimuron, dichlormid, dicyclonon, dimepiperate, disulfoton, fenchlorazole-ethyl, fenclorim, flurazole, fluxofenim, furilazole, isoxadifen-ethyl, mefenpyr-diethyl, MG 191, MON 4660, naphthalic anhydride (NA), oxabetrinil, R29148 and N-phenylsulfonylbenzoic acid amides.

The term insecticide is used herein to mean an active ingredient that kills, controls or otherwise adversely modifies the growth of insects. An insecticidal composition can be applied to any area inhabited (or maybe inhabited, or traversed by) an insect. Some of the insecticides that can be employed in the compositions of the present invention include: 1,2-dichloropropane, abamectin, acephate, acetamiprid, acethion, acetoprole, acrinathrin, acrylonitrile, alanycarb, aldicarb, aldoxycarb, aldrin, allethrin, allosamidin, allyxycarb, *alpha-*cypermethrin, *alpha*-ecdysone, *alpha*-endosulfan, amidithion, aminocarb, amiton, amiton oxalate, amitraz, anabasine, athidathion, azadirachtin, azamethiphos, azinphos-ethyl, azinphos-methyl, azothoate, barium hexafluorosilicate, barthrin, bendiocarb, benfuracarb, bensultap, *beta*-cyfluthrin, *beta*-cypermethrin, bifenthrin, bioallethrin, bioethanomethrin, biopermethrin, bistrifluron, borax, boric acid, bromfenvinfos, bromocyclen, bromo-DDT, bromophos, bromophos-ethyl, bufencarb, buprofezin, butacarb, butathiofos, butocarboxim, butonate, butoxycarboxim, cadusafos, calcium arsenate, calcium polysulfide, camphechlor, carbanolate, carbaryl, carbofuran, carbon disulfide, carbon tetrachloride, carbophenothion, carbosulfan, cartap, cartap hydrochloride, chlorantraniliprole, chlorbicyclen, chlordane, chlordecone, chlordimeform, chlordimeform hydrochloride, chlorethoxyfos, chlorfenapyr, chlorfenvinphos, chlorfluazuron, chlormephos, chloroform, chloropicrin, chlorphoxim, chlorprazophos, chlorpyrifos, chlorpyrifos-methyl, chlorthiophos, chromafenozide, cinerin I, cinerin II, cinerins, cismethrin, cloethocarb, closantel, clothianidin, copper acetoarsenite, copper arsenate, copper naphthenate, copper oleate, coumaphos, coumithoate, crotamiton, crotoxyphos, crufomate, cryolite, cyanofenphos, cyanophos, cyanthoate, cyantraniliprole, cyclethrin, cycloprothrin, cyfluthrin, cyhalothrin, cypermethrin, cyphenothrin, cyromazine, cythioate, DDT, decarbofuran, deltamethrin, demephion, demephion-O, demephion-S, demeton, demeton-methyl, demeton-O, demeton-O-methyl, demeton-S, demeton-S-methyl, demeton-S-methylsulphon, diafenthiuron, dialifos, diatomaceous earth, diazinon, dicapthon, dichlofenthion, dichlorvos, dicresyl, dicrotophos, dicyclanil, dieldrin, diflubenzuron, dilor, dimefluthrin, dimefox, dimetan, dimethoate, dimethrin, dimethylvinphos, dimetilan, dinex, dinex-diclexine, dinoprop, dinosam, dinotefuran, diofenolan, dioxabenzofos, dioxacarb, dioxathion, disulfoton, dithicrofos, d-limonene, DNOC, DNOC-ammonium, DNOC-potassium, DNOC-sodium, doramectin, ecdysterone, emamectin, emamectin benzoate, EMPC, empenthrin, endosulfan, endothion, endrin, EPN, epofenonane, eprinomectin, esdepalléthrine, esfenvalerate, etaphos, ethiofencarb, ethion, ethiprole, ethoate-methyl, ethoprophos, ethyl formate, ethyl-DDD, ethylene dibromide, ethylene dichloride, ethylene oxide, etofenprox, etrimfos, EXD, famphur, fenamiphos, fenazaflor, fenchlorphos, fenethacarb, fenfluthrin, fenitrothion, fenobucarb, fenoxacrim, fenoxycarb, fenpirithrin, fenpropathrin, fensulfothion, fenthion, fenthion-ethyl, fenvalerate, fipronil, flonicamid, flubendiamide, flucofuron, flucycloxuron, flucythrinate, flufenerim, flufenoxuron, flufenprox, fluvalinate, fonofos, formetanate, formetanate hydrochloride, formothion, formparanate, formparanate hydrochloride, fosmethilan, fospirate, fosthietan, fufenozide, furathiocarb, furethrin, *gamma*-cyhalothrin, *gamma*-HCH, halfenprox, halofenozide, HCH, HEOD, heptachlor, heptenophos, heterophos, hexaflumuron, HHDN, hydramethylnon, hydrogen cyanide, hydroprene, hyquincarb, imidacloprid, imiprothrin, indoxacarb, iodomethane, IPSP, isazofos, isobenzan, isocarbophos, isodrin, isofenphos, isofenphosmethyl, isoprocarb, isoprothiolane, isothioate, isoxathion, ivermectin, jasmolin I, jasmolin II, jodfenphos, juvenile hormone I, juvenile hormone II, juvenile hormone III, kelevan, kinoprene, lambda-cyhalothrin, lead arsenate, lepimectin, leptophos, lindane, lirimfos, lufenuron, lythidathion, malathion, malonoben, mazidox, mecarbam, mecarphon, menazon, meperfluthrin, mephosfolan, mercurous chloride, mesulfenfos, metaflumizone, methacrifos, methamidophos, methidathion, methiocarb, methocrotophos, methomyl, methoprene, methothrin, methoxychlor, methoxyfenozide, methyl bromide, methyl isothiocyanate, methylchloroform, methylene chloride, metofluthrin, metolcarb, metoxadiazone, mevinphos, mexacarbate, milbemectin, milbemycin oxime, mipafox, mirex, molosultap, monocrotophos, monomehypo, monosultap, morphothion, moxidectin, naftalofos, naled, naphthalene, nicotine, nifluridide, nitenpyram, nithiazine, nitrilacarb, novaluron, noviflumuron, omethoate, oxamyl, oxydemeton-methyl, oxydeprofos, oxydisulfoton, para-dichlorobenzene, parathion, parathion-methyl, penfluron, pentachlorophenol, permethrin, phenkapton, phenothrin, phenthoate, phorate, phosalone, phosfolan, phosmet, phosnichlor, phosphamidon, phosphine, phoxim, phoxim-methyl, pirimetaphos, pirimicarb, pirimiphos-ethyl, pirimiphos-methyl, potassium arsenite, potassium thiocyanate, pp'-DDT, prallethrin, precocene I, precocene II, precocene III, primidophos, profenofos, profluralin, profluthrin, promacyl, promecarb, propaphos, propetamphos, propoxur, prothidathion, prothiofos, prothoate, protrifenbute, pymetrozine, pyraclofos, pyrafluprole, pyrazophos, pyresmethrin, pyrethrin I, pyrethrin II, pyrethrins, pyridaben, pyridalyl, pyridaphenthion, pyrifluquinazon, pyrimidifen, pyrimitate, pyriprole, pyriproxyfen, quassia, quinalphos, quinalphos-methyl, quinothion, rafoxanide, resmethrin, rotenone, ryania, sabadilla, schradan, selamectin, silafluofen, silica gel, sodium arsenite, sodium fluoride, sodium hexafluorosilicate, sodium thiocyanate, sophamide, spinetoram, spinosad, spiromesifen, spirotetramat, sulcofuron, sulcofuron-sodium, sulfluramid, sulfotep, sulfoxaflor, sulfuryl fluoride, sulprofos, tau-fluvalinate, tazimcarb, TDE, tebufenozide, tebufenpyrad, tebupirimfos, teflubenzuron, tefluthrin, temephos, TEPP, terallethrin, terbufos, tetrachloroethane, tetrachlorvinphos, tetramethrin, tetramethylfluthrin, *theta*-cypermethrin, thiacloprid, thiamethoxam, thicrofos, thiocarboxime, thiocyclam, thiocyclam oxalate, thiodicarb, thiofanox, thiometon, thiosultap, thiosultap-disodium, thiosultap-monosodium, thuringiensin, tolfenpyrad, tralomethrin, transfluthrin, transpermethrin, triarathene, triazamate, triazophos, trichlorfon, trichlormetaphos-3, trichloronat, trifenofos, triflumuron, trimethacarb, triprene, vamidothion, vaniliprole, XMC, xylylcarb, *zeta*-cypermethrin and zolaprofos.

The term fungicide is used herein to mean an active ingredient that kills, controls or otherwise adversely modifies the growth of fungal pathogen. A fungicidal composition can be applied to any plant or area inhabited by a fungal pathogen. Some of the fungicides that can be employed in the compositions of the present invention include: (3-ethoxypropyl)-mercury bromide, 2-methoxyethylmercury chloride, 2-phenylphenol, 8-hydroxyquinoline sulfate, 8-phenylmercurioxyquinoline, acibenzolar, acibenzolar-S-methyl, acypetacs, acypetacs-copper, acypetacs-zinc, aldimorph, allyl alcohol, ametoctradin, amisulbrom, ampropylfos, anilazine, aureofungin, azaconazole, azithiram, azoxystrobin, barium polysulfide, benalaxyl, benalaxyl-M, benodanil, benomyl, benquinox, bentaluron, benthiavalicarb, benthiavalicarb-isopropyl, benzalkonium chloride, benzamacril, benzamacril-isobutyl, benzamorf, benzohydroxamic acid, bethoxazin, binapacryl, biphenyl, bitertanol, bithionol, bixafen, blasticidin-S, Bordeaux mixture, boscalid, bromuconazole, bupirimate, Burgundy mixture, buthiobate, butylamine, calcium polysulfide, captafol, captan, carbamorph, carbendazim, carboxin, carpropamid, carvone, Cheshunt mixture, chinomethionat, chlobenthiazone, chloraniformethan, chloranil, chlorfenazole, chlorodinitronaphthalene, chloroneb, chloropicrin, chlorothalonil, chlorquinox, chlozolinate, climbazole, clotrimazole, copper acetate, copper carbonate, basic, copper hydroxide, copper naphthenate, copper oleate, copper oxychloride, copper silicate, copper sulfate, copper zinc chromate, cresol, cufraneb, cuprobam, cuprous oxide, cyazofamid, cyclafuramid, cycloheximide, cyflufenamid, cymoxanil, cypendazole, cyproconazole, cyprodinil, dazomet, dazomet-sodium, DBCP, debacarb, decafentin, dehydroacetic acid, dichlofluanid, dichlone, dichlorophen, dichlozoline, diclobutrazol, diclocymet, diclomezine, diclomezine-sodium, dicloran, diethofencarb, diethyl pyrocarbonate, difenoconazole, diflumetorim, dimethirimol, dimethomorph, dimoxystrobin, diniconazole, diniconazole-M, dinobuton, dinocap, dinocap-4, dinocap-6, dinocton, dinopenton, dinosulfon, dinoterbon, diphenylamine, dipyrithione, disulfiram, ditalimfos, dithianon, DNOC, DNOC-ammonium, DNOC-potassium, DNOC-sodium, dodemorph, dodemorph acetate, dodemorph benzoate, dodicin, dodicin-sodium, dodine, drazoxolon, edifenphos, epoxiconazole, etaconazole, etem, ethaboxam, ethirimol, ethoxyquin, ethylmercury 2,3-dihydroxypropyl mercaptide, ethylmercury acetate, ethylmercury bromide, ethylmercury chloride, ethylmercury phosphate, etridiazole, famoxadone, fenamidone, fenaminosulf, fenapanil, fenarimol, fenbuconazole, fenfuram, fenhexamid, fenitropan, fenoxanil, fenpiclonil, fenpropidin, fenpropimorph, fentin, fentin chloride, fentin hydroxide, ferbam, ferimzone, fluazinam, fludioxonil, flumetover, flumorph, fluopicolide, fluopyram, fluoroimide, fluotrimazole, fluoxastrobin, fluquinconazole, flusilazole, flusulfamide, flutianil, flutolanil, flutriafol, fluxapyroxad, folpet, formaldehyde, fosetyl, fosetyl-aluminium, fuberidazole, furalaxyl, furametpyr, furcarbanil, furconazole, furconazole-cis, furfural, furmecyclox, furophanate, glyodin, griseofulvin, guazatine, halacrinate, hexachlorobenzene, hexachlorobutadiene, hexaconazole, hexylthiofos, hydrargaphen, hymexazol, imazalil, imazalil nitrate, imazalil sulfate, imibenconazole, iminoctadine, iminoctadine triacetate, iminoctadine trialbesilate, iodomethane, ipconazole, iprobenfos, iprodione, iprovalicarb, isoprothiolane, isopyrazam, isotianil, isovaledione, kasugamycin, kresoxim-methyl, mancopper, mancozeb, mandipropamid, maneb, mebenil, mecarbinzid, mepanipyrim, mepronil, meptyldinocap, mercuric chloride, mercuric oxide, mercurous chloride, metalaxyl, metalaxyl-M, metam, metam-ammonium, metam-potassium, metam-sodium, metazoxolon, metconazole, methasulfocarb, methfuroxam, methyl bromide, methyl isothiocyanate, methylmercury benzoate, methylmercury dicyandiamide, methylmercury pentachlorophenoxide, metiram, metominostrobin, metrafenone, metsulfovax, milneb, myclobutanil, myclozolin, *N*-(ethylmercury)-p-toluene-sulphonanilide, nabam, natamycin, nitrostyrene, nitrothal-isopropyl, nuarimol, OCH, octhilinone, ofurace, orysastrobin, oxadixyl, oxine-copper, oxpoconazole, oxpoconazole fumarate, oxycarboxin, pefurazoate, penconazole, pencycuron, penflufen, pentachlorophenol, penthiopyrad, phenylmercuriurea, phenylmercury acetate, phenylmercury chloride, phenylmercury derivative of pyrocatechol, phenylmercury nitrate, phenylmercury salicylate, phosdiphen, phthalide, picoxystrobin, piperalin, polycarbamate, polyoxins, polyoxorim, polyoxorim-zinc, potassium azide, potassium polysulfide, potassium thiocyanate, probenazole, prochloraz, procymidone, propamocarb, propamocarb hydrochloride, propiconazole, propineb, proquinazid, prothiocarb, prothiocarb hydrochloride, prothioconazole, pyracarbolid, pyraclostrobin, pyraclostrobin, pyrametostrobin, pyraoxystrobin, pyrazophos, pyribencarb, pyridinitril, pyrifenox, pyrimethanil, pyriofenone, pyroquilon, pyroxychlor, pyroxyfur, quinacetol, quinacetol sulfate, quinazamid, quinconazole, quinoxyfen, quintozene, rabenzazole, salicylanilide, sedaxane, silthiofam, simeconazole, sodium azide, sodium orthophenylphenoxide, sodium pentachlorophenoxide, sodium polysulfide, spiroxamine, streptomycin, sulfur, sultropen, TCMTB, tebuconazole, tebufloquin, tecloftalam, tecnazene, tecoram, tetraconazole, thiabendazole, thiadifluor, thicyofen, thifluzamide, thiochlorfenphim, thiomersal, thiophanate, thiophanate-methyl, thioquinox, thiram, tiadinil, tioxymid, tolclofosmethyl, tolylfluanid, tolylmercury acetate, triadimefon, triadimenol, triamiphos, triarimol, triazbutil, triazoxide, tributyltin oxide, trichlamide, tricyclazole, tridemorph, trifloxystrobin, triflumizole, triforine, triticonazole, uniconazole, uniconazole-P, validamycin, valifenalate, vinclozolin, zarilamid, zinc naphthenate, zineb, ziram and zoxamide.

The biologically-active ingredients comprise from 20 to 65 percent by weight of the pesticidal composition.

The biologically-active ingredients may be dissolved or dispersed in the methylated vegetable oil. The particle size of the dispersed active ingredient may be from 0.1 µm to 100 µm.

The surface-active agents can be anionic, cationic or nonionic in character and can be employed as emulsifying agents, wetting agents, suspending agents, or for other purposes. Surfactants conventionally used in the art of formulation and which may also be used in the present formulations are described, *inter alia,* in "McCutcheon's Detergents and Emulsifiers Annual", MC Publishing Corp., Ridgewood, New Jersey, 1998 and in "Encyclopedia of Surfactants", Vol. I-III, Chemical publishing Co., New York, 1980-81. Typical surface-active agents include salts of alkyl sulfates, such as diethanolammonium lauryl sulfate; alkylarylsulfonate salts, such as calcium dodecylbenzenesulfonate; alkylphenol-alkylene oxide addition products, such as nonylphenol-C₁₈ ethoxylate; alcohol-alkylene oxide addition products, such as tridecyl alcohol-C₁₆ ethoxylate; soaps, such as sodium stearate; alkylnaphthalene-sulfonate salts, such as sodium dibutylnaphthalenesulfonate; dialkyl esters of sulfosuccinate salts, such as sodium di(2-ethylhexyl) sulfosuccinate; sorbitol esters, such as sorbitol oleate; quaternary amines, such as lauryl trimethylammonium chloride; polyethylene glycol esters of fatty acids, such as polyethylene glycol stearate; block copolymers of ethylene oxide and propylene oxide; salts of mono and dialkyl phosphate esters.

The pesticidal compositions of the present invention can be diluted in water or other solvents and then applied by conventional means or applied as is without dilution, for example, in a basal application of an herbicide. The pesticidal compositions of the present invention can also be tank mixed with other formulations.

### Experimental

### Example 1) Use of cold-stabilized methylated vegetable oil as a solvent for agricultural active ingredients

Triclopyr butoxyethyl ester was formulated using a methylated vegetable oil (Stepan C-42: 72% methyl laurate, 26% methyl myristate) to form the emulsifiable concentrate Comparative Formulation A.

**Comparative Formulation A**

| **Component** | **AI** | **AI (Pet Wt)** |
|---|---|---|
| Triclopyr butoxyethylester | 667.6 g/l | 60.3 wt% |
| Agent X-3625-97 Emulsifier Blend | 72.0 g/l | 6.5 wt% |
| Stepan C42 MSO | 367.5 g/l | 33.2 wt% |

Upon storage at cold temperatures, the Comparative Formulation A started to become hazy at a temperature of -10 °C and was frozen solid at a temperature of -18 °C

Triclopyr butoxyethyl ester was formulated using Permaflo methylated soybean oil (< 3% saturated fatty acid methyl esters) to form emulsifiable concentrate Invention Formulation #1.

**Invention Formulation #1**

| **Component** | **AI** | **AI (Pet Wt)** |
|---|---|---|
| Triclopyr butoxyethylester | 667.6 g/l | 60.3 wt% |
| Agent X-3625-97 Emulsifier Blend | 72.0 g/l | 6.5 wt% |
| Permaflo Biodiesel | 367.5 g/l | 33.2 wt% |

Invention Formulation #1 remained as a free flowing, clear liquid at temperatures as low as -20 °C.

### Example 2) Solubility of agricultural active ingredients in cold-stabilized methylated vegetable oil

The solubility of several agricultural active ingredients in Permaflo methylated soybean oil was determined using a high throughput solubility screen.

### Sample Preparation:

Liquid handler was calibrated for each liquid and vials were tared. Active ingredients were melted or dissolved and then transferred into tared vials. Solvent was removed or active was allowed to crystallize before weighing. Permaflo methylated soybean oil was added in desired quantities; vials were weighed, and capped. Mixtures were agitated (220 rpm) for 48 hours at 0 °C. After 48 hours, solid AI was added to samples which were completely dissolved. Samples were held at 0 °C for 24 hours before imaging. Samples were transferred to shaker plate on bench and were agitated for 48 hours, before seeding, holding for 24 hours and imaging. Samples were then transferred to 40 °C shaker plate, agitated for 48 hours, seeded, held and then imaged again. All samples were imaged using normal light.

The Permaflo methylated soybean oil exhibited very good solubility for a range of active ingredients.

| Active Ingredient | 0 °C | 24 °C | 40 °C |
|---|---|---|---|
| Chlorpyrifos | 35% | 55% | > 60% |
| Cyhalofop | 15% | 25% | 45% |
| Fluroxypyr | 25% | 35% | 55% |
| Dithiopyr | 15% | 15% | 35% |

### Example 3) Use of cold-stabilized methylated vegetable oil as a Basal Oil

Comparative Formulation A was diluted with Permaflo methylated soybean oil (<3% saturated fatty acid methyl esters) at a ratio of 25 : 75. The mixture remained as a clear, free flowing liquid at -20 °C.

Currently commercially used methylated seed oils for basal applications mixed with Comparative Formulation A at a ratio of 25:75 are frozen solid at a temperature of -18 °C:

| | |
|---|---|
| Eco Pak 1031-MSO | frozen solid |
| Super Spread MSO | frozen solid |
| Loveland MSO | frozen solid |
| Helena Premium MSO | frozen solid |

### Example 4) Use of cold-stabilized soybean oil as a tank mix adjuvant

Methylated seed oils are commonly used as tank mix adjuvants for agricultural active ingredients. To ensure no phytotoxicity to the treated crop, plants were treated with an emulsion of Permaflo methylated soybean oil and compared to a common commercial methylated seed oil. At the typical application rate of 1% v/v, the Permaflo methylated seed oil did not cause any phytotoxic injury to Cabbage (2-3 leaf), Squash (2-3 leaf), Soybean (V1-V3), Corn (V3-V4), Wheat (3"-4" tall), Tomatoes (3-5" tall), and Cotton (2-4 leaf).

## Claims

1. A pesticide composition consisting of a) from 25 to 70 percent by weight of a methylated vegetable oil having less than 10 percent by weight of saturated fatty acid methyl esters and less than 10 percent by weight of fatty acid methyl esters of carbon chain length less than C₁₀; b) from 20 to 65 percent by weight of one or more pesticides dissolved or dispersed in the methylated vegetable oil and c) one or more surface-active agents.

## Patentansprüche

1. Eine Pestizidzusammensetzung bestehend aus a) von 25 bis 70 Gewichtsprozent eines methylierten Pflanzenöls mit weniger als 10 Gewichtsprozent an gesättigten Fettsäuremethylestern und weniger als 10 Gewichtsprozent an Fettsäuremethylestern mit einer Kohlenstoffkettenlänge von weniger als C₁₀; b) von 20 bis 65 Gewichtsprozent eines oder mehrerer Pestizide, die in dem methylierten Pflanzenöl gelöst oder dispergiert sind, und c) einem oder mehreren oberflächenaktiven Mitteln.

## Revendications

1. Composition de pesticide constituée de a) de 25 à 70 pour cent en poids d'une huile végétale méthylée comportant moins de 10 pour cent en poids d'esters méthyliques d'acides gras saturés et moins de 10 pour cent en poids d'esters méthyliques d'acides gras ayant une longueur de chaîne carbonée inférieure à C₁₀; b) de 20 à 65 pour cent en poids d'un ou de plusieurs pesticide(s) dissous ou dispersé(s) dans l'huile végétale méthylée et c) un ou plusieurs agent(s) tensioactif(s).
